# EUROPÄISCHE PATENTANMELDUNG

(11) **EP 4 019 938 A1**
(43) Veröffentlichungstag der Anmeldung: **29.06.2022**
(21) Anmeldenummer: 20216351.5
(22) Anmeldetag: 22.12.2020
(51) Int. Cl.: G01N 21/03, G01N 21/17, G01N 29/24

(54) **FLUIDMESSZELLE FÜR EINEN PHOTOAKUSTISCHEN SENSOR**

(71) Anmelder: Fraunhofer-Gesellschaft zur Förderung der angewandten Forschung e.V., 80686 München (DE)
(72) Erfinder: Weber, Christian, 79110 Freiburg (DE); Kapp, Johannes, 79110 Freiburg (DE); Schmitt, Katrin, 79110 Freiburg (DE)
(74) Vertreter: WSL Patentanwälte Partnerschaft mbB

(57) **Zusammenfassung**

Beschrieben wird eine Fluidmesszelle (10) für einen photoakustischen Sensor (1) zum Erfassen einer Eigenschaft eines Probenfluids, wobei die Fluidmesszelle (10) aufweist ein Gehäuse (11) mit einem Fluidaufnahmeraum (12) zur Aufnahme des Probenfluids, wobei der Fluidaufnahmeraum (12) einen Erfassungsabschnitt (13) aufweist und eine Schallmesseinrichtung (14), wobei die Schallmesseinrichtung (14) derart in dem Erfassungsabschnitt (13) angeordnet ist, dass mit der Schallmesseinrichtung (14) eine sich in einem in dem Fluidaufnahmeraum (12) aufgenommen Fluid ausbreitende Schallwelle erfassbar ist. Dabei weist die Fluidmesszelle (10) der eingangs genannten Art einen Spiegel (15) mit einer eine elektromagnetische Anregungsstrahlung (30) reflektierenden Struktur auf, wobei der Spiegel (15) derart angeordnet und ausgestaltet ist, dass der Spiegel (15) in einem Betrieb der Fluidmesszelle (10) die Anregungsstrahlung (30) nach einem ersten Durchgang durch den Erfassungsabschnitt (13) in den Erfassungsabschnitt (13) zurückreflektiert.

## Beschreibung

Die vorliegende Erfindung betrifft eine Fluidmesszelle für einen photoakustischen Sensor zum Erfassen einer Eigenschaft eines Probenfluids, wobei die Fluidmesszelle aufweist ein Gehäuse mit einem Fluidaufnahmeraum zur Aufnahme des Probenfluids, wobei der Fluidaufnahmeraum einen Erfassungsabschnitt aufweist und eine Schallmesseinrichtung, wobei die Schallmesseinrichtung derart in dem Erfassungsabschnitt angeordnet ist, dass mit der Schallmesseinrichtung eine sich in einem in dem Fluidaufnahmeraum aufgenommen Fluid ausbreitende Schallwelle erfassbar ist.

Darüber hinaus betrifft die vorliegende Erfindung auch einen photoakustischen Sensor zum Erfassen einer Eigenschaft eines Probenfluids mit einer Fluidmesszelle der eingangs beschriebenen Art, einer Strahlungsquelle, wobei die Strahlungsquelle derart ausgestaltet ist, dass die Strahlungsquelle in dem Betrieb des Sensors amplitudenmodulierte elektromagnetische Anregungsstrahlung erzeugt und abstrahlt, wobei die Strahlungsquelle und die Fluidmesszelle derart ausgestaltet und angeordnet sind, dass in einem Betrieb des Sensors die von der Strahlungsquelle erzeugte und abgestrahlte Anregungsstrahlung in den Fluidaufnahmeraum der Fluidmesszelle eintritt.

Darüber hinaus betrifft die vorliegende Erfindung auch ein Verfahren zum Erfassen einer Eigenschaft eines Probenfluids mit den Schritten: Erzeugen einer mit einer Modulationsfrequenz modulierten elektromagnetischen Anregungsstrahlung, wobei eine Trägerfrequenz der Anregungsstrahlung derart gewählt wird, dass das Probenfluid die Anregungsstrahlung absorbiert, Beleuchten des Probenfluids mit der Anregungsstrahlung, so dass die Anregungsstrahlung einen ersten Durchgang durch das Probenfluid erfährt und Erfassen zumindest einer Amplitude oder einer Phase einer von dem Probenfluid aufgrund der Absorption der Anregungsstrahlung erzeugten Schallwelle. Im Sinne der vorliegenden Erfindung bezeichnet der Begriff Trägerfrequenz die Frequenz des elektromagnetischen Wechselfeldes der Anregungsstrahlung.

Photoakustische Messverfahren basieren auf der Anregung eines Probenfluides, üblicherweise eines Gases, mit einer elektromagnetischen Anregungsstrahlung. Aufgrund der Absorption der elektromagnetischen Anregungsstrahlung in dem Probenfluid kommt es zu einer Erwärmung und Ausdehnung des Probenfluids. Aufgrund der Erwärmung und Ausdehnung des Probenfluides kommt es zu einer Druckerhöhung in der Fluidmesszelle. Wird die elektromagnetische Strahlung, mit welcher das Probenfluid in der Fluidmesszelle angeregt wird, gepulst, so kommt es abwechselnd zu einer Erwärmung und Abkühlung und damit Ausdehnung und Kontraktion des Probenfluides in der Fluidmesszelle und es entsteht innerhalb der Fluidmesszelle eine Schallwelle. Diese Schallwelle kann mit herkömmlichen Detektoren zur Schalldetektion, d.h. Schallmesseinrichtungen, erfasst werden.

Die Amplitude der sich in der Fluidmesszelle ausbreitenden Schallwelle ist dabei proportional zu der Strahlungsabsorption des Probenfluides. Die Strahlungsabsorption wiederum ist proportional zur Konzentration des absorbierenden Probenfluides. Anhand der Amplitude der erfassten Schallwelle kann daher auf die Konzentration des Probenfluides in der Fluidmesszelle geschlossen werden. Die Bestimmung der Konzentration ist dabei nicht nur auf Probenfluide in einem Vakuum begrenzt, sondern kann auch bei Probenfluiden erfolgen, die mit einem anderen Fluid vermischt sind. Wenn die Anregung der Fluidmischung mit einer elektromagnetischen Strahlung erfolgt, deren Frequenz nur von den Molekülen des Probenfluides absorbiert wird, so kann der Anteil des Probenfluides in der Fluidmischung ermittelt werden.

Ein solches photoakustisches Messverfahren kommt zum Beispiel für Abgasuntersuchungen oder zum Nachweis von Luftschadstoffen zum Einsatz. Dabei können beispielsweise Konzentrationen von Methan in Stickstoff von nur zehn Teilen in einer Milliarde nachgewiesen werden.

Aus dem Stand der Technik ist bekannt, kohärente Strahlungsquellen für die Anregungsstrahlung zu verwenden. Kohärente Strahlungsquellen haben den Vorteil, dass sie eine hohe Leistungsdichte bieten und gleichzeitig über eine lange Strecke kollimiert werden können. Dies wiederum hat den Vorteil, dass die Strecke, die für die Wechselwirkung mit dem Probenfluid zur Verfügung steht, sehr lang gewählt werden kann, wodurch auch geringste Konzentrationen eines Probenfluides in der Fluidmesszelle nachgewiesen werden können, da durch die verlängerte Wechselwirkung eine erhöhte Absorption stattfindet und damit auch die Amplitude der erzeugten Schallwelle steigt.

Kohärente Strahlungsquellen wie Laser haben jedoch den Nachteil, dass sie teuer und aufwendig in der Handhabung sind. Zudem ist die Kompaktheit einer Fluidmesszelle eingeschränkt, wenn die Wechselwirkungslänge vergrößert wird.

Die der vorliegenden Erfindung zugrundeliegende Aufgabe besteht daher darin, eine Fluidmesszelle, einen photoakustischen Sensor bzw. ein Verfahren zum Erfassen einer Eigenschaft eines Probenfluids bereitzustellen, bei welchen auch kostengünstigere, inkohärente Strahlungsquellen zum Einsatz kommen können, wobei gleichzeitig dennoch die Sensitivität der Fluidmesszelle möglichst hoch ist.

Erfindungsgemäß wird diese Aufgabe durch eine Fluidmesszelle gemäß Anspruch 1 gelöst. Dazu weist die Fluidmesszelle der eingangs genannten Art einen Spiegel mit einer eine elektromagnetische Anregungsstrahlung reflektierenden Struktur auf, wobei der Spiegel derart angeordnet und ausgestaltet ist, dass der Spiegel in einem Betrieb der Fluidmesszelle die Anregungsstrahlung nach einem ersten Durchgang durch den Erfassungsabschnitt in den Erfassungsabschnitt zurückreflektiert.

Durch das mehrmalige Durchlaufen des Erfassungsabschnittes der Fluidmesszelle wird die Sensitivität der Fluidmesszelle erhöht, da die Wechselwirkungslänge mit dem Probenfluid und damit die Absorption vergrößert wird. So kann auch inkohärente Anregungsstrahlung zum Einsatz kommen, deren Leistungsdichte geringer ist als die einer kohärenten Strahlung. Gleichzeitig wird durch den Spiegel eine kompakte Bauform der erfindungsgemäßen Fluidmesszelle ermöglicht. Inkohärente Strahlungsquellen haben den Vorteil, dass diese deutlich kostengünstiger und leichter in der Handhabung sind als kohärente Strahlungsquellen.

In einer Ausführungsform ist die reflektierende Struktur ein Metall mit einer reflektierenden Oberfläche oder eine dielektrische Beschichtung auf einem Träger. Vorzugsweise wird die reflektierende Struktur so gewählt, dass sie für die gewählte Anregungsstrahlung optimale Reflexionseigenschaften aufweist und die Anregungsstrahlung möglichst wenig absorbiert.

Da dennoch zu einem geringen Anteil Absorption auftreten kann, ist in einer Ausführungsform die reflektierende Struktur akustisch von dem Erfassungsabschnitt getrennt.

Der oben beschriebene photoakustische Effekt ist nicht nur auf Flüssigkeiten und Gase beschränkt, sondern lässt sich auch an Festkörpern beobachten. Trifft die elektromagnetische Anregungsstrahlung auf die Wände der Fluidmesszelle, kann es auch in dem Wandmaterial, d.h. auch in der reflektierenden Struktur zu einer Absorption, einer daraus folgenden Erwärmung sowie Ausdehnung des Wandmaterials kommen, sodass auch von der reflektierenden Struktur eine Schallwelle in dem Probenfluid erzeugt wird. Dies führt wiederum zu einer Verfälschung der eigentlich zu erfassenden Schallwelle aufgrund der Absorption des Probenfluides, da von der Schallmesseinrichtung sowohl die Schallwelle des Probenfluides als auch die von der reflektierenden Struktur ausgesendete Schallwelle erfasst wird. Insbesondere bei geringer Konzentration des Probenfluides und/oder einer geringen Leistungsdichte der Anregungsstrahlung wird damit die Auflösungsgrenze und die Langzeitstabilität des Messverfahrens beeinträchtigt.

Um also die erfindungsgemäße Fluidmesszelle mit einer kostengünstigen, inkohärenten Strahlungsquelle so betreiben zu können, dass dennoch auch geringe Konzentrationen eines Probenfluides zuverlässig bestimmt werden können, ist eine akustische Trennung der reflektierenden Struktur von dem Erfassungsabschnitt von Vorteil.

Eine akustische Trennung der reflektierenden Struktur von dem Erfassungsabschnitt bedeutet, dass sich eine von der reflektierenden Struktur generierte Schallwelle nicht in dem Erfassungsabschnitt ausbreitet, in dem sich die von dem Probenfluid ausgesendete Schallwelle ausbreitet. D.h. selbst, wenn eine Absorption in der reflektierenden Struktur des Spiegels auftritt und es daher zu einer zeitweisen Erwärmung und Aussendung einer Schallwelle kommt, wird diese Schallwelle nicht von der Schallmesseinrichtung erfasst, da der Bereich, in dem sich die Schallwellen ausbreitet, akustisch von dem Erfassungsabschnitt mit der Schallmesseinrichtung getrennt ist.

Insbesondere wenn ein Laser als Strahlungsquelle verwendet wird, führen die hohen Leistungsdichten dazu, dass eine signifikante thermische Ausdehnung der reflektierenden Struktur stattfindet und daher die Messung durch eine Schallwelle der reflektierenden Struktur verfälscht wird. Wird also die erfindungsgemäße Fluidmesszelle mit einem Laser als Strahlungsquelle betrieben, führt dies dazu, dass besonders genaue Messergebnisse erzielt werden können, da der Laser einerseits bereits eine hohe Leistungsdichte zur Verfügung stellt und andererseits die Sensitivität aufgrund der verlängerten Wechselwirkungslänge erhöht wird.

In einer weiteren Ausführungsform ist zwischen der reflektierenden Struktur und dem Erfassungsabschnitt ein akustisches Filter angeordnet, wobei das akustische Filter eine von der Anregungsstrahlung in oder auf dem Spiegel angeregte Störschallwelle herausfiltert, so dass diese Störschallwelle nicht oder gedämpft in den Erfassungsabschnitt gelangt. Auf diese Weise kann besonders kostengünstig und einfach eine akustische Trennung zwischen der reflektierenden Struktur des Spiegels und des Erfassungsabschnitts gewährleistet werden. Das akustische Filter wird dabei so gewählt, dass die elektromagnetische Anregungsstrahlung nicht beeinflusst wird, die von der reflektierenden Struktur ausgesendete Schallwelle jedoch absorbiert oder derart reflektiert wird, dass sie nicht in den Erfassungsabschnitt gelangen kann. Beispielsweise werden als akustische Filter Kombinationen von Materialien oder Geometrien eingesetzt, die durch unterschiedliche akustische Flussimpedanzen die Ausbreitung der entstehenden Schallwelle bei zumindest einer ausgewählten Frequenz behindern.

In einer weiteren Ausführungsform ist die reflektierende Struktur außerhalb des Fluidaufnahmeraums angeordnet, wobei die reflektierende Struktur von dem Fluidaufnahmeraum durch ein für die Anregungsstrahlung transparentes Fenster getrennt ist. In diesem Fall wird eine Schallwelle, die in der reflektierenden Struktur erzeugt wird, nicht direkt in das Fluid in dem Fluidaufnahmeraum übertragen und kann so auch nicht von der Schallmesseinrichtung in dem Erfassungsabschnitt erfasst werden. Durch die Wahl eines für die Anregungsstrahlung transparenten Fensters wird jedoch sichergestellt, dass die Anregungsstrahlung aus dem Fluidaufnahmeraum heraus und ohne signifikante Verluste wieder in diesen hinein gelangen kann.

In einer Ausführungsform ist die reflektierende Struktur eine metallische Beschichtung oder eine dielektrische Beschichtung auf einer Außenfläche des Fensters. Eine Schallwelle, die sich in der Beschichtung aufgrund der Anregungsstrahlung ausbreitet, wird durch das Fenster akustisch von dem Fluidaufnahmeraum getrennt. Der Vorteil, insbesondere einer metallischen Beschichtung, besteht darin, dass die thermische Leitfähigkeit der reflektierenden Struktur erhöht und damit die Erwärmung und thermische Ausdehnung der reflektierenden Struktur reduziert ist, wodurch auch das Aussenden einer Störschallwelle reduziert wird.

In einer weiteren Ausführungsform ist die reflektierende Struktur eine reflektierende Oberfläche eines Formkörpers aus Metall. Dabei wird in einer Ausführungsform ein Metall mit einer hohen thermischen Leitfähigkeit gewählt, sodass es aufgrund der auftreffenden Anregungsstrahlung nahezu zu keiner Erwärmung des Metalls und damit auch zu keiner Aussendung einer Schallwelle in die Umgebung des Metallformkörpers kommt, die von der Schallmesseinrichtung erfasst werden könnte. Ein solcher Formkörper ist daher in einer Ausführungsform sogar innerhalb des Fluidaufnahmeraums angeordnet.

In einer weiteren Ausführungsform ist zwischen der reflektierenden Struktur und dem transparenten Fenster eine Vakuumkammer vorgesehen. Durch das Vakuum zwischen der reflektierenden Struktur und dem transparenten Fenster wird eine Schallübertragung besonders effektiv unterbunden, sodass von der reflektierenden Struktur erzeugte Schallwellen nicht in den Fluidaufnahmeraum gelangen. Reflektierende Struktur und Fluidaufnahmeraum sind effektiv akustisch getrennt.

In einer weiteren Ausführungsform weist die Fluidmesszelle ein erstes fokussierendes Element auf, wobei das erste fokussierende Element derart angeordnet und ausgestaltet ist, dass es die von der reflektierenden Struktur reflektierte Anregungsstrahlung in Richtung des Fluidaufnahmeraums fokussiert. In einer Ausführungsform liegt ein von dem ersten fokussierenden Element erzeugter erster Fokus der Anregungsstrahlung in dem Fluidaufnahmeraum. Durch die Fokussierung der an der reflektierenden Struktur reflektierten Anregungsstrahlung wird die Divergenz der inkohärenten Anregungsstrahlung kompensiert, sodass sichergestellt wird, dass die reflektierte Anregungsstrahlung nicht mit Wänden der Fluidmesszelle wechselwirkt und aufgrund der reflektierten Anregungsstrahlung Schallwellen in oder auf den Wänden der Fluidmesszelle erzeugt werden, die das Messergebnis ebenfalls beeinträchtigen könnten.

In einer bevorzugten Ausführungsform ist der Spiegel ein Hohlspiegel, der die reflektierende Struktur und das erste fokussierende Element bildet. Spiegel und erstes fokussierendes Element werden also durch ein einziges Bauteil realisiert, wodurch der Aufbau der erfindungsgemäßen Fluidmesszelle vereinfacht wird.

In einer weiteren Ausführungsform weist die Fluidmesszelle ein zweites fokussierendes Element für die Anregungsstrahlung auf. In einer Ausführungsform ist das zweite fokussierende Element derart angeordnet und ausgestaltet, dass in dem Betrieb der Fluidmesszelle ein zweiter Fokus der Anregungsstrahlung in dem Fluidaufnahmeraum liegt, wobei der zweite Fokus in einer Strahleintrittsrichtung der Anregungsstrahlung vor der reflektierenden Struktur des Spiegels angeordnet ist.

Unter der Strahleintrittsrichtung wird diejenige Richtung verstanden, die die Anregungsstrahlung von einem Eintritt in den Fluidaufnahmeraum bis zum Auftreffen auf den Spiegel aufweist. Mit anderen Worten erfolgt bei dieser Ausführungsform bereits eine Fokussierung der Anregungsstrahlung bei oder vor dem Einkoppeln in die Fluidmesszelle. Dadurch wird die Leistungsdichte der Anregungsstrahlung in dem Fluidaufnahmeraum und damit die Absorption und Genauigkeit der Messergebnisse erhöht. Zusätzlich wird eine Wechselwirkung der Anregungsstrahlung mit den Wänden der Fluidmesszelle vor der Reflexion an dem Spiegel verhindert.

Insbesondere bei der Verwendung von divergenten, inkohärenten Strahlungsquellen wird so sichergestellt, dass eine ausreichende Leistungsdichte der Anregungsstrahlung in dem Fluidaufnahmeraum zur Wechselwirkung mit dem Probenfluid zur Verfügung steht, es gleichzeitig aber auch zu keiner Berührung mit den Wänden der Fluidmesszelle kommt. So wird trotz divergenter Strahlungsquellen eine Messgenauigkeit erzielt, die mit der eines Lasers als Anregungsquelle vergleichbar ist. Gleichzeitig sind jedoch die Kosten und der Regelungsaufwand für die inkohärenten Strahlungsquellen deutlich geringer.

In einer weiteren Ausführungsform sind das erste fokussierende Element und das zweite fokussierende Element konfokal angeordnet. Dies vereinfacht die Geometrie der erfindungsgemäßen Fluidmesszelle.

In einer weiteren Ausführungsform weist die Fluidmesszelle eine Austrittsöffnung auf, wobei die reflektierende Struktur derart ausgestaltet und angeordnet ist, dass die Anregungsstrahlung in dem Betrieb der Fluidmesszelle in einer Strahlaustrittsrichtung nach einem zweiten Durchgang durch den Fluidaufnahmeraum durch die Austrittsöffnung aus dem Fluidaufnahmeraum austritt. Dies bietet den Vorteil, dass auch die reflektierte Anregungsstrahlung nicht mit einer der Wände der Fluidmesszelle wechselwirkt. Die Strahlaustrittsrichtung ist der Strahleintrittsrichtung im Wesentlichen entgegengesetzt.

In einer Ausführungsform ist die Austrittsöffnung mit einem für die Anregungsstrahlung transparenten Fenster verschlossen. So wird die reflektierte Anregungsstrahlung durch die Austrittsöffnung aus der Fluidmesszelle geleitet, ohne dass in oder an der Austrittsöffnung selbst noch eine Schallwelle erzeugt wird, die womöglich in den Erfassungsabschnitt ausgesendet wird.

In einer weiteren Ausführungsform weist das Gehäuse eine Eintrittsöffnung für die elektromagnetische Anregungsstrahlung in der Strahleintrittsrichtung vor der reflektierenden Struktur auf. Vorzugsweise ist die Eintrittsöffnung mit einem für die Anregungsstrahlung transparenten Fenster verschlossen. In einer Ausführungsform sind die Eintrittsöffnung und die Austrittsöffnung identisch, sodass die bauliche Ausgestaltung der erfindungsgemäßen Fluidmesszelle vereinfacht ist. Die Eintrittsöffnung ermöglicht, dass einerseits genügend Leistungsdichte der Anregungsstrahlung in dem Fluidaufnahmeraum zur Verfügung steht, andererseits ist die Eintrittsöffnung genauso wie die Austrittsöffnung aus einem solchen Material gefertigt, dass möglichst wenig Anregungsstrahlung absorbiert wird und damit auch von der Eintrittsöffnung keine Störschallwellen ausgesendet werden.

In einer weiteren Ausführungsform definiert der Fluidaufnahmeraum ein abgeschlossenes Probenvolumen. Dies ist von Vorteil, um einen quantitativen Wert für die Gaskonzentration ermitteln zu können.

In einer weiteren Ausführungsform ist der Fluidaufnahmeraum derart ausgebildet, dass der Fluidaufnahmeraum einen akustischen Resonator für die Schallwelle bildet. So können auch Schallwellen mit zunächst sehr kleiner Amplitude erfasst werden.

Die der Erfindung zugrundeliegende Aufgabe wird weiterhin durch einen photoakustischen Sensor zum Erfassen einer Eigenschaft eines Probenfluids gelöst mit einer Fluidmesszelle gemäß einer der oben beschriebenen Ausführungsformen und einer Strahlungsquelle, wobei die Strahlungsquelle derart ausgestaltet ist, dass die Strahlungsquelle in dem Betrieb des Sensors amplitudenmodulierte elektromagnetische Anregungsstrahlung erzeugt und abstrahlt, wobei die Strahlungsquelle und die Fluidmesszelle derart ausgestaltet und angeordnet sind, dass in einem Betrieb des Sensors die von der Strahlungsquelle erzeugte und abgestrahlte Anregungsstrahlung in den Fluidaufnahmeraum der Fluidmesszelle eintritt.

In einer Ausführungsform ist die Strahlungsquelle innerhalb eines Gehäuseinnenraumes eines Gehäuses der Fluidmesszelle, insbesondere aber innerhalb des Fluidaufnahmeraums, angeordnet.

Dies bietet, insbesondere bei kompakten Strahlungsquellen, den Vorteil, dass ein sehr kompakter photoakustischer Sensor bereitgestellt wird, der auch außerhalb von Laboranwendungen in der Industrie oder bei Feldversuchen zum Einsatz kommen kann.

In einer weiteren Ausführungsform ist die Strahlungsquelle eine inkohärente Strahlungsquelle, insbesondere eine Leuchtdiode oder eine thermische Strahlungsquelle. Solche Strahlungsquellen sind kostengünstig und zudem einfach in ihrer Handhabung. In einer Ausführungsform ist die Strahlungsquelle eine Superkontinuumsquelle.

Die der Erfindung zugrundeliegende Aufgabe wird weiterhin durch ein Verfahren gemäß dem unabhängigen auf dieses Verfahren gerichteten Anspruchs gelöst. Dabei weist das Verfahren der eingangs genannten Art weiterhin den Schritt auf, dass nach dem ersten Durchgang durch das Probenfluid die Anregungsstrahlung reflektiert wird, so dass die Anregungsstrahlung einen zweiten Durchgang durch das Probenfluid erfährt.

In einer Ausführungsform weist das Verfahren zusätzlich den Schritt auf, dass die Anregungsstrahlung vor dem zweiten Durchgang durch das Probenfluid fokussiert wird, so dass nach dem Reflektieren der Anregungsstrahlung ein erster Fokus in dem Probenfluid erzeugt wird.

Soweit das Verfahren mit einer Vorrichtung gemäß dieser Erfindung ausgeführt wird, so weist diese die entsprechenden Einrichtungen hierfür auf. Insbesondere sind Ausführungsformen der Vorrichtung zum Ausführen der beschriebenen Ausführungsformen des Verfahrens geeignet.

Weitere Vorteile, Merkmale und Anwendungsmöglichkeiten der vorliegenden Erfindung werden anhand der folgenden Beschreibung einer Ausführungsform und der dazugehörigen Figuren deutlich.
- Figur 1: zeigt eine schematische Gesamtübersicht einer Ausführungsform des erfindungsgemäßen photoakustischen Sensors.
- Figur 2: zeigt eine schematische Darstellung einer Ausführungsform der erfindungsgemäßen Fluidmesszelle.
- Figur 3: zeigt eine schematische Darstellung einer weiteren Ausführungsform der erfindungsgemäßen Fluidmesszelle.
- Figur 4: zeigt eine schematische Darstellung einer weiteren Ausführungsform der erfindungsgemäßen Fluidmesszelle mit einem akustischen Filter.

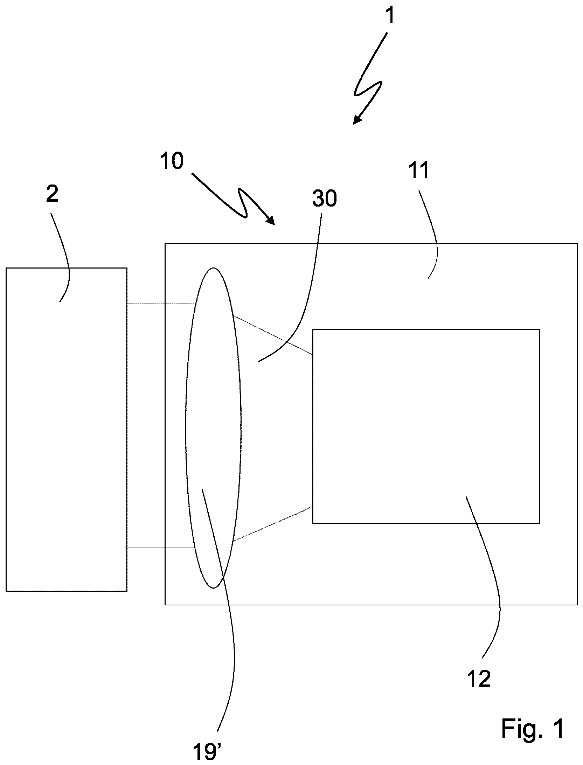

Der in Figur 1 gezeigte photoakustische Sensor 1 weist eine Strahlungsquelle 2 auf, die eine amplitudenmodulierte elektromagnetische Anregungsstrahlung 30 abstrahlt. Die elektromagnetische Anregungsstrahlung 30 wird in eine Fluidmesszelle 10 eingekoppelt.

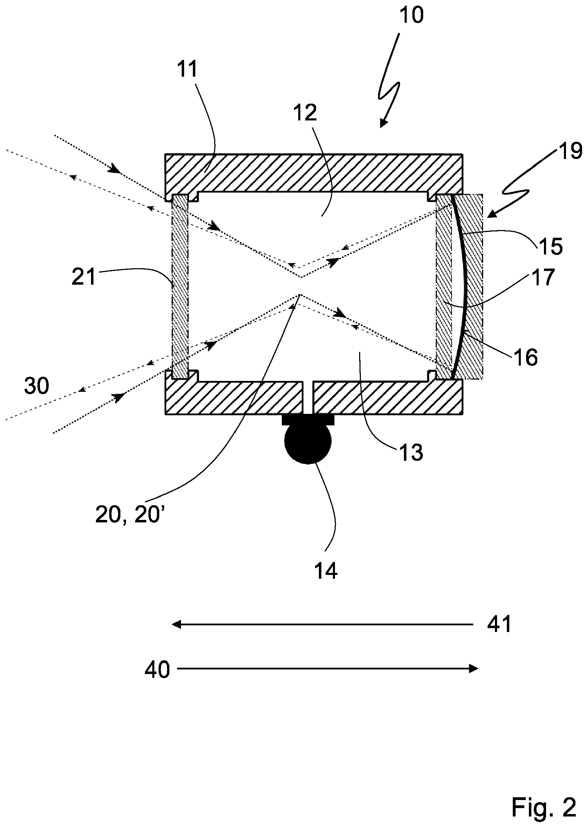

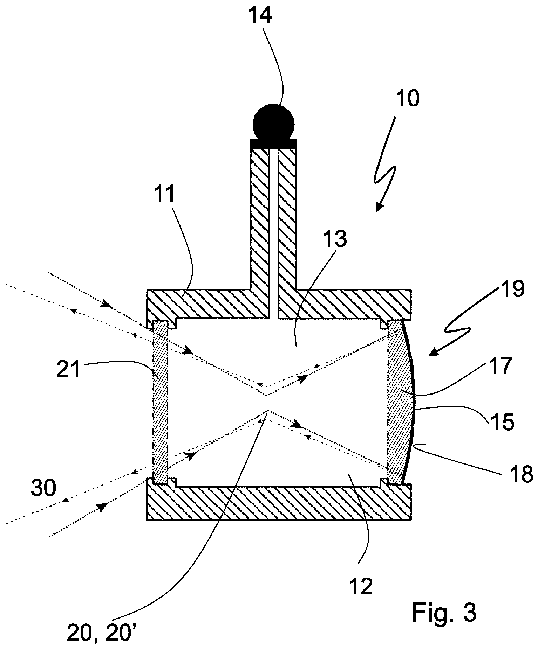

Die Fluidmesszelle 10, deren Aufbau genauer in den Figuren 2, 3 und 4 dargestellt ist, verfügt über ein Gehäuse 11, in welchem eine Linse 19' als zweites fokussierendes Element im Sinne der vorliegenden Anmeldung und ein Fluidaufnahmeraum 12 angeordnet sind (siehe Figur 1). Die Linse 19' fokussiert die elektromagnetische Anregungsstrahlung 30, die von der Strahlungsquelle 2 ausgesendet wird, auf einen zweiten Fokus 20' (siehe Figuren 2 und 3) innerhalb des Fluidaufnahmeraums 12.

Der genaue Strahlgang der elektromagnetischen Anregungsstrahlung 30 innerhalb des Fluidaufnahmeraums 12 ist in den Figuren 2, 3 und 4 dargestellt. Die Anregungsstrahlung 30 tritt zunächst durch eine Eintrittsöffnung in den Fluidaufnahmeraum 12 ein. Die Eintrittsöffnung ist mit einem für die Anregungsstrahlung 30 transparenten Fenster 21 verschlossen. Das Volumen des Fluidaufnahmeraums 12 ist mit dem Fenster 21 gegenüber der Umgebung abgeschlossen. An dem Fenster 21 findet keine Absorption der elektromagnetischen Anregungsstrahlung 30 statt.

Die Lage des zweiten Fokus 20' ist so gewählt, dass die Anregungsstrahlung 30 keinen Kontakt mit den schraffiert dargestellten Außenwänden der Fluidmesszelle 10 hat. Vielmehr trifft die Anregungsstrahlung 30 in den in Figur 2 und 3 gezeigten Ausführungsformen auf ein transparentes Fenster 17, nachdem die Anregungsstrahlung 30 den Fluidaufnahmeraum 12 in Strahleintrittsrichtung 40 in einem ersten Durchgang durchlaufen hat. Das transparente Fenster 17 absorbiert die Anregungsstrahlung 30 ebenfalls nicht, sondern lässt diese ungehindert aus dem Fluidaufnahmeraum 12 austreten.

Nachdem die Anregungsstrahlung 30 das transparente Fenster 17 passiert hat, trifft sie unmittelbar auf einen Spiegel 15, der eine reflektierende Struktur 16 aufweist. Zudem ist der Spiegel 15 als erstes fokussierendes Element 19 ausgebildet, d.h. die Anregungsstrahlung 30 wird einerseits an der reflektierenden Struktur 16 des Spiegels 15 in den Fluidaufnahmeraum 12 zurückreflektiert und andererseits zugleich auf einen ersten Fokus 20 fokussiert.

Das erste fokussierende Element 19 ist dabei so ausgestaltet, dass der erste Fokus 20 mit dem zweiten Fokus 20' des zweiten fokussierenden Elementes 19' zusammenfällt. So wird sichergestellt, dass auch bei dem zweiten Durchgang der elektromagnetischen Anregungsstrahlung 30 durch den Fluidaufnahmeraum 12 keine Wechselwirkung mit den Wänden der Fluidmesszelle 10 stattfindet.

Um eine Schallwelle, die beim Auftreffen der elektromagnetischen Anregungsstrahlung 30 von der reflektierenden Struktur 16 möglicherweise generiert wird, akustisch vom dem Erfassungsabschnitt 13 des Fluidaufnahmeraums 12 zu trennen, ist in der in Figur 2 gezeigten Ausführungsform ein Hohlraum zwischen der reflektierenden Struktur 16 und dem transparenten Fenster 17 vorgesehen. Dieser Hohlraum schließt ein Vakuum ein, worin sich eine möglicherweise von der reflektierenden Struktur 16 generierte Störschallwelle nicht ausbreitet.

Nachdem die Anregungsstrahlung 30 an der reflektierenden Struktur 16 des Spiegels 15 reflektiert wurde, durchläuft die Anregungsstrahlung 30 den Fluidaufnahmeraum 12 in einem zweiten Durchgang in Strahlaustrittsrichtung 41 und trifft erneut auf die Eintrittsöffnung 21, die gleichzeitig auch als Austrittsöffnung 21 fungiert und die Anregungsstrahlung 30 ohne Absorption aus dem Fluidaufnahmeraum 12 austreten lässt.

Bei jedem Durchgang der Anregungsstrahlung 30 kommt es zu einer Absorption der Anregungsstrahlung 30 in dem Probengas, welches in den Fluidaufnahmeraum 12 eingefüllt ist. Durch die Absorption kommt es zu einer Erwärmung und Ausdehnung des Gases innerhalb des Fluidaufnahmeraums 12. Da der Fluidaufnahmeraum 12 ein definiertes, abgeschlossenes Volumen bildet, welches sich nicht ändert, kommt es somit zu einer Druckerhöhung innerhalb des Fluidaufnahmeraums 12. Da die Anregungsstrahlung 30 mit einer Modulationsfrequenz moduliert ist, kommt es zu einer periodischen Ausdehnung und Kontraktion des Probengases in dem Fluidaufnahmeraum 12, wodurch eine Schallwelle innerhalb des Fluidaufnahmeraums 12 entsteht. Diese Schallwelle breitet sich in dem Fluidaufnahmeraum 12 aus.

Zur Erfassung der Schallwelle ist in dem Fluidaufnahmeraum 12 ein Mikrofon 14 als Schallmesseinrichtung angeordnet, das die Amplitude der Schallwelle erfasst. Im Sinne der vorliegenden Anmeldung bildet in der dargestellten Ausführungsform der Erfassungsabschnitt 13, innerhalb dessen sich die Schallwelle ausbreitet und erfasst wird, den Fluidaufnahmeraum 12. Es sind jedoch Ausführungsformen denkbar in denen der Fluidaufnahmeraum größer ist als der Erfassungsabschnitt, in welchem das Mikrofon angeordnet ist.

Da die Amplitude der Schallwelle von der Absorption der Anregungsstrahlung 30 durch das Probengas abhängt, und die Absorption wiederum von der Konzentration und Molekülzusammensetzung des Probengases, können aus der Amplitude der Schallwelle Rückschlüsse auf die Eigenschaften, insbesondere aber auf die Konzentration des Probengases gezogen werden.

In Figur 3 ist eine weitere Ausführungsform der erfindungsgemäßen Fluidmesszelle 10 dargestellt. Der Aufbau der Fluidmesszelle 10 ähnelt dem Aufbau der in Figur 2 gezeigten Fluidmesszelle.

Allerdings bildet in der in Figur 3 gezeigten Ausführungsform das transparente Fenster 17 gleichzeitig einen Teil des Spiegels 15. Dazu ist eine Außenfläche 18 des transparenten Fensters metallisch beschichtet. Diese Beschichtung stellt die reflektierende Struktur 16 des Spiegels 15 dar. Das transparente Fenster führt zu einer akustischen Trennung zwischen der reflektierenden Struktur 16 und dem Erfassungsabschnitt 13. Die metallische Beschichtung erhöht zudem die thermische Leitfähigkeit der reflektierenden Struktur 16, sodass sich dort ausbildende Schallwellen eine geringe Amplitude aufweisen, da die thermische Ausdehnung verringert ist.

Zudem ist die Außenfläche 18 des transparenten Fensters 17 gewölbt, sodass der so gebildete Hohlspiegel 15 gleichzeitig auch das erste fokussierende Element 19 bildet.

Der Verlauf der Anregungsstrahlung 30 innerhalb des Fluidaufnahmeraums 12 und das Funktionsprinzip der Fluidmesszelle 10 ist identisch zu der in Figur 2 gezeigten Ausführungsform. Auf die obigen Ausführungen wird verwiesen.

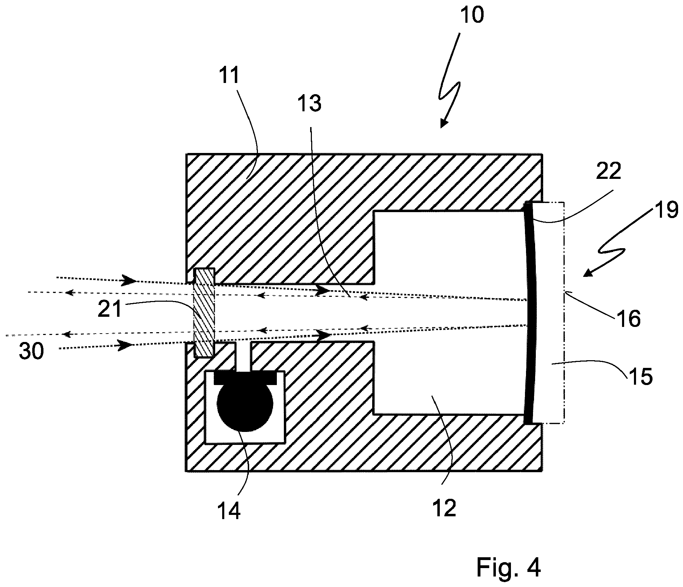

In Figur 4 ist eine weitere Ausführungsform der erfindungsgemäßen Fluidmesszelle 10 dargestellt. Hierbei erfolgt die akustische Trennung der reflektierenden Struktur 16 von dem Erfassungsabschnitt 13 durch ein akustisches Filter 22, das zwischen der reflektierenden Struktur 16 eines Spiegels 15 und dem Erfassungsabschnitt 13 angeordnet ist. Das akustische Filter 22 verhindert, dass eine in der reflektierenden Struktur 16 erzeugte Schallwelle in den Erfassungsabschnitt 13 gelangt und somit das Messsignal beeinträchtigt. Wie bei den anderen gezeigten Ausführungsformen ist der Spiegel 15 leicht gewölbt, sodass dieser das erste fokussierende Element 19 bildet.

Die in Figur 2 gezeigte Ausführungsform der erfindungsgemäßen Fluidmesszelle 10 eignet sich beispielsweise insbesondere für die Untersuchung von Kohlenstoffdioxid als Probengas, wobei eine Wellenlänge der Anregungsstrahlung 30 von 4,3 µm gewählt wird. Dabei wird die Anregungsstrahlung 30 mit einer Modulationsfrequenz von 900 Hz moduliert. Die in Figur 3 gezeigte Ausführungsform eignet sich hingegen insbesondere für die Untersuchung von Ozon als Probengas, wobei eine Anregungswellenlänge von 280 nm und eine Modulationsfrequenz von 2 kHz für die Anregungsstrahlung 30 gewählt wird. Die in Figur 4 gezeigte Ausführungsform eignet sich insbesondere für die Untersuchung von Wasser bei einer Anregungswellenlänge von 1,4 nm und einer Modulationsfrequenz von 4 kHz für die Anregungsstrahlung 30.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: photoakustischer Sensor
- 2: Strahlungsquelle
- 10: Fluidmesszelle
- 11: Gehäuse
- 12: Fluidaufnahmeraum
- 13: Erfassungsabschnitt
- 14: Mikrofon
- 15: Spiegel
- 16: reflektierende Struktur
- 17: transparentes Fenster
- 18: Außenfläche des transparenten Fensters
- 19: erstes fokussierendes Element
- 19': Linse
- 20: erster Fokus
- 20': zweiter Fokus
- 21: Fenster der Eintritts-/Austrittsöffnung
- 22: akustisches Filter
- 30: Anregungsstrahlung
- 40: Strahleintrittsrichtung
- 41: Strahlaustrittsrichtung

## Patentansprüche

1. Fluidmesszelle (10) für einen photoakustischen Sensor (1) zum Erfassen einer Eigenschaft eines Probenfluids, wobei die Fluidmesszelle (10) aufweist
ein Gehäuse (11) mit einem Fluidaufnahmeraum (12) zur Aufnahme des Probenfluids, wobei der Fluidaufnahmeraum (12) einen Erfassungsabschnitt (13) aufweist und
eine Schallmesseinrichtung (14),
wobei die Schallmesseinrichtung (14) derart in dem Erfassungsabschnitt (13) angeordnet ist, dass mit der Schallmesseinrichtung (14) eine sich in einem in dem Fluidaufnahmeraum (12) aufgenommen Fluid ausbreitende Schallwelle erfassbar ist,
**dadurch gekennzeichnet, dass**
die Fluidmesszelle (10) einen Spiegel (15) mit einer eine elektromagnetische Anregungsstrahlung (30) reflektierenden Struktur (16) aufweist, wobei der Spiegel (15) derart angeordnet und ausgestaltet ist, dass der Spiegel (15) in einem Betrieb der Fluidmesszelle (10) die Anregungsstrahlung (30) nach einem ersten Durchgang durch den Erfassungsabschnitt (13) in den Erfassungsabschnitt (13) zurückreflektiert.

2. Fluidmesszelle (10) nach dem vorhergehenden Anspruch, wobei die reflektierende Struktur (16) von dem Erfassungsabschnitt (13) akustisch getrennt ist.

3. Fluidmesszelle (10) nach einem der vorhergehenden Ansprüche, wobei zwischen der reflektierenden Struktur (16) und dem Erfassungsabschnitt (13) ein akustisches Filter (22) angeordnet ist, wobei das akustische Filter (22) eine von der Anregungsstrahlung (30) in oder auf dem Spiegel (15) angeregte Störschallwelle herausfiltert, so dass diese Störschallwelle nicht oder gedämpft in den Erfassungsabschnitt (13) gelangt.

4. Fluidmesszelle (10) nach einem der vorhergehenden Ansprüche, wobei die reflektierende Struktur (16) außerhalb des Fluidaufnahmeraums (12) angeordnet ist und wobei die reflektierende Struktur (16) von dem Fluidaufnahmeraum (12) durch ein für die Anregungsstrahlung (30) transparentes Fenster (17) getrennt ist.

5. Fluidmesszelle (10) nach dem vorhergehenden Anspruch, wobei die reflektierende Struktur (16) eine metallische Beschichtung auf einer Außenfläche (18) des Fensters (17) ist.

6. Fluidmesszelle (10) nach einem der vorhergehenden Ansprüche, wobei die reflektierende Struktur (16) eine reflektierende Oberfläche eines Formkörpers aus Metall ist.

7. Fluidmesszelle (10) nach einem der Ansprüche 4 bis 6, wobei zwischen der reflektierenden Struktur (16) und dem transparenten Fenster (17) eine Vakuumkammer vorgesehen ist.

8. Fluidmesszelle (10) nach einem der vorhergehenden Ansprüche, wobei die Fluidmesszelle (10) ein erstes fokussierendes Element (19) aufweist, wobei das erste fokussierende Element (19) derart angeordnet und ausgestaltet ist, dass es die von der reflektierenden Struktur (16) reflektierte Anregungsstrahlung (30) fokussiert, so dass vorzugsweise ein erster Fokus (20) der Anregungsstrahlung (30) in dem Fluidaufnahmeraum (12) liegt.

9. Fluidmesszelle (10) nach dem vorhergehenden Anspruch, wobei die Fluidmesszelle (10) ein zweites fokussierendes Element (19') für die Anregungsstrahlung (30) aufweist, wobei das zweite fokussierende Element (19') derart angeordnet ist, dass in dem Betrieb der Fluidmesszelle (10) ein zweiter Fokus (20') der Anregungsstrahlung (30) in dem Fluidaufnahmeraum (12) liegt, wobei der zweite Fokus (20') in einer Strahleintrittsrichtung (40) der Anregungsstrahlung (30) vor der reflektierenden Struktur (16) angeordnet ist.

10. Fluidmesszelle (10) nach dem vorhergehenden Anspruch, wobei das erste fokussierende Element (19) und das zweite fokussierende Element (19') konfokal angeordnet sind.

11. Fluidmesszelle (10) nach einem der vorhergehenden Ansprüche, wobei die Fluidmesszelle (10) eine Austrittsöffnung (21) aufweist und wobei die reflektierende Struktur (16) derart ausgestaltet und angeordnet ist, dass die Anregungsstrahlung (30) in dem Betrieb der Fluidmesszelle (10) in einer Strahlaustrittsrichtung (41) nach einem zweiten Durchgang durch den Fluidaufnahmeraum (12) durch die Austrittsöffnung (21) aus dem Fluidaufnahmeraum (12) austritt.

12. Photoakustischer Sensor (1) zum Erfassen einer Eigenschaft eines Probenfluids mit
einer Fluidmesszelle (10) nach einem der vorhergehenden Ansprüche und einer Strahlungsquelle (2), wobei die Strahlungsquelle (2) derart ausgestaltet ist, dass die Strahlungsquelle (2) in dem Betrieb des Sensors (1) amplitudenmodulierte elektromagnetische Anregungsstrahlung (30) erzeugt und abstrahlt, wobei die Strahlungsquelle (2) und die Fluidmesszelle (10) derart ausgestaltet und angeordnet sind, dass in einem Betrieb des Sensors (1) die von der Strahlungsquelle (2) erzeugte und abgestrahlte Anregungsstrahlung (30) in den Fluidaufnahmeraum (12) der Fluidmesszelle (10) eintritt.

13. Photoakustischer Sensor (1) nach Anspruch 12, wobei die Strahlungsquelle (2) eine inkohärente Strahlungsquelle, insbesondere eine Leuchtdiode oder eine thermische Strahlungsquelle, ist.

14. Verfahren zum Erfassen einer Eigenschaft eines Probenfluids mit den Schritten
Erzeugen einer mit einer Modulationsfrequenz modulierten elektromagnetischen Anregungsstrahlung (30), wobei eine Trägerfrequenz der Anregungsstrahlung (30) derart gewählt wird, dass das Probenfluid die Anregungsstrahlung (30) absorbiert,
Beleuchten des Probenfluids mit der Anregungsstrahlung (30), so dass die Anregungsstrahlung (30) einen ersten Durchgang durch das Probenfluid erfährt und
Erfassen zumindest einer Amplitude oder einer Phase einer von dem Probenfluid aufgrund der Absorption der Anregungsstrahlung (30) erzeugten Schallwelle,
**dadurch gekennzeichnet, dass** das Verfahren weiterhin den Schritt aufweist
nach dem ersten Durchgang durch das Probenfluid Reflektieren der Anregungsstrahlung (30), so dass die Anregungsstrahlung (30) einen zweiten Durchgang durch das Probenfluid erfährt.

15. Verfahren nach Anspruch 14, wobei das Verfahren zusätzlich den Schritt aufweist Fokussieren der Anregungsstrahlung (30) vor dem zweiten Durchgang durch das Probenfluid, so dass nach dem Reflektieren der Anregungsstrahlung (30) ein erster Fokus (20) in dem Probenfluid erzeugt wird.
